# EUROPÄISCHE PATENTANMELDUNG

(11) **EP 1 063 458 A1**
(43) Veröffentlichungstag der Anmeldung: **27.12.2000**
(21) Anmeldenummer: 00111136.8
(22) Anmeldetag: 24.05.2000
(51) Int. Cl.: F16L 1/032

(54) **Anordnung zum Einführen eines Rohres in den Erdboden**

(30) Priorität: 23.06.1999 DE 19928684
(71) Anmelder: Georg Föckersperger GmbH, 91086 Aurachtal-Münchaurach (DE)
(72) Erfinder: Föckersperger, Günter, 91086 Aurachtal-Münchaurach (DE); Föckersperger, Frank, 91086 Aurachtal-Münchaurach (DE)
(74) Vertreter: Zech, Stefan Markus Dipl.-Phys.

(57) **Zusammenfassung**

Die Erfindung betrifft eine Anordnung zum Einführen eines Rohres (20) oder Kabels in den Erdboden mittels eines pflugartigen Geräts, das mit einem Schwert (1) in den Erdboden eindringt und eine Erdrinne bildet. Das Schwert (1) zieht einen Verdränger (10), der einen Erdkanal bildet und mit dem einzuführenden Rohr (20) oder Kabel verbunden ist, und/oder zieht eine Rohrzuführung (4), die zum Einlegen von Rohren (20) oder Kabeln in die vom Schwert gebildete Erdrinne dient. Das Schwert (1) und/oder der Verdränger (10) einerseits oder das Schwert (1) und/oder die Rohrführung (4) andererseits weisen an mindestens einem in den Erdboden eindringenden Bereich Vorsprünge (13) auf, die unter Ausbildung eines Zwischenraums (16) voneinander beabstandet sind. Die Vorsprünge (13) weisen ferner wenigstens eine Räumfläche (14, 15, 15') auf, die derart ausgebildet ist, daß Steine oder dergleichen härtere Gegenstände quer zur Fahrtrichtung (F) in den Erdboden geschoben werden.

## Beschreibung

Die Erfindung betrifft eine Anordnung zum Einführen eines Rohres oder Kabels in den Erdboden mittels eines pflugartigen Geräts nach dem Oberbegriff des Patentanspruchs 1.

Eine derartige Anordnung zum Einführen eines Rohres in den Erdboden mittels eines pflugartigen Geräts ist in dem Gebrauchsmuster G 88 09 959.8 U1 beschrieben. Das pflugartige Gerät umfaßt ein Schwert, das in den Erdboden eindringt und zur Bildung eines Erdkanals über ein Zugseil einen Verdränger zieht, der mit dem einzuführenden Rohr verbunden ist. Mit einer solchen Anordnung werden Rohre eingeführt, die einen Durchmesser von mehr als 180 mm aufweisen. Nachteilig bei dieser Anordnung ist, daß beim Durchziehen des Rohres durch den Erdkanal Steine oder sonstige scharfkantige Gegenstände nicht in ausreichendem Maße von dem einzuführenden Rohr entfernt werden. Nach Einbringen des Rohrs gelangen diese Steine in unmittelbare Nähe des Rohrs und können dessen Außenflächen beschädigen. Besonders Kunststoffrohre können aufgerissen und in ihrer Funktion nachhaltig beeinträchtigt werden. Auch behindern Steine oder sonstige härtere Gegenstände, die unmittelbar nach dem Durchziehen des Verdrängers in Anlage an das Rohr gelangen, das weitere Einziehen des Rohrs.

Aus dem Gebrauchsmuster G 94 19 910.8 U1 ist eine weitere Anordnung für oder an einem Kabelpflug bekannt. Diese Anordnung umfaßt ein Schwert, das in den Erdboden eindringt und eine Erdrinne bildet. Das Schwert ist mit einer kastenförmigen Rohrzuführung verbunden. Die Rohrzuführung dient zum Einlegen von Rohren oder Kabeln in die Erdrinne, wobei die Rohre oder Kabel kontinuierlich von oben her in die Rohrzuführung eingeführt und an einem unten gelegenen Ende der Rohrzuführung in die Erdrinne ausgetragen werden. Bei dieser Anordnung dürfen die Rohre oder Kabel einen Durchmesser von maximal 180 mm oder weniger aufweisen. Um zu vermeiden, daß scharfkantige Steine in die Nähe des Rohrs oder Kabels gelangen, wird zusätzlich Sand in die Erdrinne eingebracht. Dies ist zum einen kostspielig und zum anderen ist nicht gewährleistet, daß die Rohre oder Kabel vollständig von Sand umgeben sind, da der Sand nur von oben her auf die Rohre bzw. Kabel geschüttet wird, so daß die Rohre oder Kabel mit ihrer Unterseite nach wie vor direkt mit scharfkantigem Gestein in Kontakt kommen können.

Die Aufgabe der vorliegenden Erfindung besteht dann, eine Anordnung zum Einführen von Rohren oder Kabeln in den Erdboden so auszubilden, daß die Rohre oder Kabel sicher im Erdboden positioniert sind. Diese Aufgabe wird mit einer Anordnung nach den Merkmalen des Patentanspruchs 1 gelöst. Vorteilhafte Weiterbildungen sind in den Unteransprüchen angegeben.

Ein Kerngedanke der vorliegenden Erfindung besteht darin, daß das Schwert und/oder der Verdränger an mindestens einem in den Erdboden eindringenden Bereich Vorsprünge aufweisen, die unter Ausbildung eines Zwischenraums voneinander beabstandet sind. Die Vorsprünge weisen wenigstens eine Räumfläche auf, die derart ausgebildet ist, daß Steine oder dergleichen härtere Gegenstände quer zur Fahrtrichtung in den Erdboden geschoben werden. Hierdurch werden Steine oder dergleichen härtere Gegenstände auf eine bestimmte Distanz vom Schwert und/oder vom Verdränger weggeschoben, so daß sie nicht mehr mit dem einzuführenden Rohr oder Kabel in Kontakt kommen können. Desweiteren wird eine effektive Filterwirkung erzielt, so daß nur noch weicher Boden oder kleinere Steine durch die Zwischenräume gelangen können. Steine oder härtere Gegenstände, die im Vergleich zur Breite der Zwischenräume größere Abmessungen aufweisen, werden vollständig von den Räumflächen erfaßt und quer zur Fahrtrichtung weggeschoben. Dies gilt auch für Steine oder härtere Gegenstände, die zwar vergleichsweise kleinere Abmessungen aufweisen, jedoch mit den Räumflächen unmittelbar in Kontakt gelangen. Je nach Beschaffenheit des Bodens kann die Breite der Zwischenräume variiert werden, wobei eine um so bessere Filterwirkung erzielt wird, je geringer die Breite der Zwischenräume ist. Das einzuführende Rohr oder Kabel hat durch die Filterwirkung weniger Bodenberührung, da es nur noch an Punktbereichen auf dem Erdboden aufliegt. Daraus resultiert wiederum ein geringerer Reibungswiderstand des Rohrs oder Kabels, so daß es leichter nachgezogen werden kann.

Ein weiterer Kerngedanke der Erfindung besteht darin, daß das Schwert und/oder die Rohrzuführung an mindestens einem in dem Boden eindringenden Bereich Vorsprünge aufweisen, die unter Ausbildung eines Zwischenraums voneinander beabstandet sind. Die Vorsprünge weisen wenigstens eine Räumfläche auf, die derart ausgebildet ist, daß Steine oder dergleichen härtere Gegenstände quer zur Fahrtrichtung in den Erdboden geschoben werden. Diese Ausführung bietet sich dann an, wenn Rohre oder Kabel mit einem Durchmesser von 180 mm oder weniger verlegt werden sollen. Rohre oder Kabel mit einem Durchmesser in diesem Größenbereich sind als Rollenware erhältlich und können über eine Rohrzuführung kontinuierlich von oben in den Erdboden eingelegt werden. Ein Verdränger ist hier nicht erforderlich. Durch das Vorsehen von Vorsprüngen am Schwert und/oder an der Rohrzuführung wird ebenfalls eine optimale Filterwirkung erzielt, so daß Steine und sonstige härtere Gegenstände von dem einzulegenden Rohr entfernt werden.

In einer vorteilhaften Ausgestaltung erstrecken sich die Räumflächen der Vorsprünge im wesentlichen von einem in Fahrtrichtung betrachtet vorderen Ende zu einem hinteren Ende der Vorsprünge und gleichzeitig ausgehend vom vorderen Ende quer zur Fahrtrichtung, derart, daß sich die Höhe der Räumflächen kontinuierlich zum hinteren Ende hin vergrößert. Die Distanz der Steine zum einzuführenden Rohr entspricht der maximalen Höhe der Räumflächen. Durch die quer zur Fahrtrichtung stetig ansteigende Höhe der Räumflächen werden die Steine nach außen weggeschoben und nicht von den Räumflächen mitgeführt.

In einer bevorzugten Ausgestaltung umfassen die Räumflächen eine oberseitige Kontaktfläche und zwei quer zur Fahrtrichtung erstreckende und im wesentlichen parallel zueinander angeordnete Seitenflächen, wobei die Seitenflächen an die oberseitige Kontaktfläche angrenzen. Die Vorsprünge besitzen somit einen etwa rechteckförmigen Querschnitt, wodurch die Stabilität erhöht wird. Die oberseitige Kontaktfläche ist vorzugsweise eben ausgebildet. Alternativ kann die oberseitige Kontaktfläche auch quer zur Fahrtrichtung bzw. nach außen gewölbt sein.

Vorteilhafterweise ist die oberseitige Kontaktfläche hinsichtlich ihrer Breite und Länge so dimensioniert, daß sie eine im Vergleich zur Breite der Zwischenräume geringere Breite und größere Länge aufweist. Durch die längliche Ausbildung der oberseitigen Kontaktfläche mit vergleichsweiser geringer Breite bietet diese somit eine geringe Angriffsfläche beim Durchdringen des Erdbodens, so daß der Reibungswiderstand der Anordnung beim Bilden des Erdkanals bzw. der Erdrinne gering gehalten wird.

Zweckmäßigerweise erstrecken sich die Vorsprünge im wesentlichen parallel zur Fahrtrichtung, wodurch eine gleichmäßige Filterwirkung erzielt wird.

In einer besonders bevorzugten Ausgestaltung sind die Vorsprünge in Bezug auf die Fahrtrichtung strahlenförmig angeordnet, derart, daß die Breite der Zwischenräume am vorderen Ende der Vorsprünge geringer ist als am hinteren Ende der Vorsprünge. Durch die strahlenförmige Anordnung der Vorsprünge wird die Filterwirkung aufgrund der geringeren Breite der Zwischenräume am vorderen Ende weiter erhöht.

Zweckmäßigerweise ist der Verdränger im wesentlichen zylindrisch ausgebildet, wobei die Vorsprünge an einem definierten, vorzugsweise in Fahrtrichtung betrachtet hinteren Bereich des Verdrängers angeordnet sind. Die Vorsprünge erstrecken sich von der Umfangsfläche des hinteren Bereichs des Verdrängers radial nach außen. Durch diese konstruktive Ausgestaltung wird der Umfang des Verdrängers unmittelbar vor dem einzuziehenden Rohr effektiv vergrößert, ohne daß der Reibungswiderstand des Verdrängers beim Durchziehen durch den Erdboden nennenswert erhöht wird. Der Verdränger mit derartig angeordneten Vorsprüngen kann mit praktisch gleichbleibender Antriebskraft wie ein herkömmlicher Verdränger durch den Erdboden gezogen werden.

Alternativ können sich die Vorsprünge schräg zur Umfangsfläche des hinteren Bereichs des Verdrängers erstrecken, derart, daß die Vorsprünge mit einer Seitenfläche zur Umfangsfläche des hinteren Bereichs hingeneigt sind.

Vorteilhafterweise ist der hintere Bereich des Verdrängers im wesentlichen kegelstumpfartig ausgebildet, derart, daß sich der Durchmesser des hinteren Bereichs entgegengesetzt zur Fahrtrichtung vergrößert. Die Vorsprünge sind dabei in Bezug auf die Fahrtrichtung strahlenförmig an der Umfangsfläche des hinteren Bereichs angeordnet, derart, daß die Breite der Zwischenräume am vorderen Ende der Vorsprünge geringer ist als am hinteren Ende der Vorsprünge. Durch die kegelstumpfförmige Ausbildung des hinteren Bereichs und durch die strahlenförmige Anordnung der Vorsprünge auf diesem hinteren Bereich wird gewährleistet, daß zum einen ein ausreichend großer Erdkanal geschaffen wird und daß zum anderen auch kleinere Steine radial nach außen geschoben werden.

In einer bevorzugten Ausgestaltung ist der hintere Bereich des Verdrängers in Umfangsrichtung rotierbar ausgebildet. Diese Ausgestaltung ist insbesondere mit einer schrägen Anordnung der Vorsprünge gemäß Anspruch 8 vorteilhaft. Die Vorsprünge sind dabei jeweils mit einer ersten Seitenfläche zur Umfangsfläche des Verdrängers hin geneigt und in entsprechender Weise mit der der ersten Seitenfläche gegenüberliegenden zweiten Seitenfläche von der Umfangsfläche des hinteren Bereichs weggeneigt. Die Rotation erfolgt dann zweckmäßigerweise in der Richtung, die entgegengesetzt zur Neigungsrichtung der Vorsprünge liegt, d.h. die Vorsprünge schieben den Erdboden mit ihrer zweiten Seitenfläche, die von der Umfangsfläche des hinteren Bereichs weggeneigt ist, radial nach außen. Durch diese konstruktive Maßnahme wird auch lockerer Erdboden beiseite geschoben, wodurch der Reibungswiderstand des einzuziehenden Rohres erheblich reduziert wird.

Vorteilhafterweise ist das Schwert über Zugmittel, insbesondere über Schwingen, mit dem Verdränger oder der Rohrzuführung verbunden. An den Zugmitteln ist ein Aufsatz lösbar befestigbar, wobei der Aufsatz eine Umfangsfläche und darauf angeordnete Vorsprünge aufweist. Der Aufsatz kann je nach Bodenbeschaffenheit auf einfache Weise zusätzlich am Schwert angebracht oder wieder davon entfernt werden.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Hierbei zeigen:
- Fig. 1: eine schematische Seitenansicht einer ersten Ausführungsform einer Anordnung zum Einführen eines Rohres, bestehend aus einem Schwert und einem Verdränger;
- Fig. 2: eine Schnittansicht des Verdrängers längs der Linie II-II von Fig. 1;
- Fig. 3a, 3b: eine perspektivische Ansicht eines Vorsprungs;
- Fig. 4: eine schematische Schnittansicht des Verdrängers gemäß einer weiteren Ausgestaltung; und
- Fig. 5: eine schematische Seitenansicht einer zweiten Ausführungsform der Anordnung zum Einführen eines Rohres, bestehend aus einem Schwert und einer Rohrzuführung.

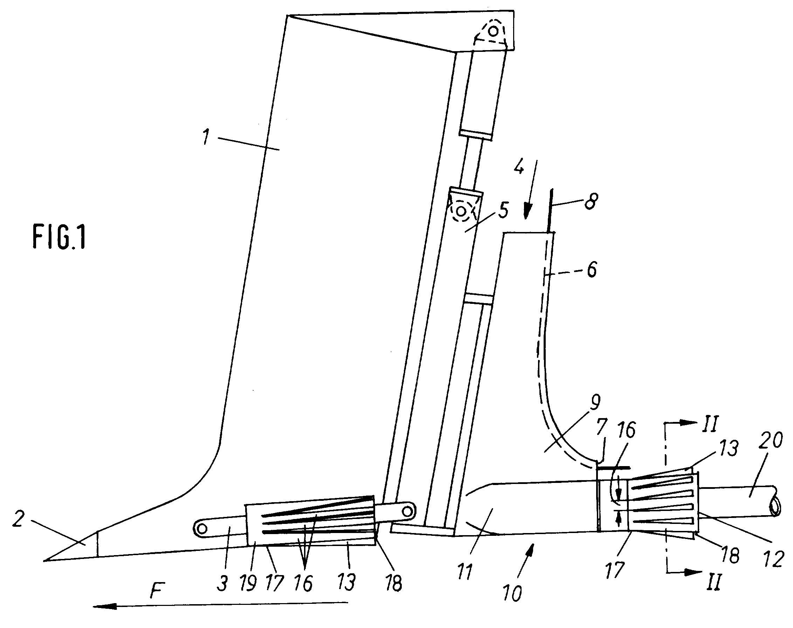

In Figur 1 ist eine schematische Seitenansicht einer ersten Ausführungsform der Anordnung zum Einführen eines Rohres in den Erdboden mittels eines pflugartigen Geräts gezeigt. Das pflugartige Gerät umfaßt ein Schwert 1 mit einer Spitze 2, das von einem lenkbaren Antrieb (nicht gezeigt) in Fahrtrichtung F gezogen wird und in den Erdboden zur Bildung einer Erdrinne eindringt. In Fahrtrichtung F betrachtet, befindet sich hinter dem Schwert 1 ein Verdränger 10, der zur Bildung eines Erdkanals für das einzuziehende Rohr 20 vorgesehen ist. Das Rohr 20 ist lösbar und zweckmäßigerweise schwenkbar an dem Verdränger 10 angeordnet. Der Verdränger 10 ist im wesentlichen hohlzylindrisch ausgebildet, wobei sein in Fahrtrichtung F vorn gelegener Bereich 11 abgerundet oder konisch zulaufend ist. Der Verdränger ist in dem konkreten Ausführungsbeispiel gemäß Figur 1 an einem unteren Bereich 9 einer Rohrzuführung 4 angeordnet, die zum Einführen von Zusatzeinrichtungen 8 für das einzuziehende Rohr 20, wie beispielsweise Trassenbänder, Steuerkabel oder Belüftungsrohre, in den Erdkanal dient. Die Rohrzuführung 4 ist über eine Verstelleinrichtung 5 und über Schwingen 3 an dem Schwert 1 angelenkt. Mittels der Verstelleinrichtung 5, die zweckmäßigerweise hydraulisch betrieben wird, kann die Höhenlage der Rohrzuführung 4 und entsprechend des Verdrängers 10 innerhalb eines gewissen Bereichs verstellt und in der gewünschten Höhenlage fixiert werden. Die Zusatzeinrichtungen 8 werden über eine Rinne 6 der Rohrzuführung 4 eingebracht, sowie von dieser Rinne her nach unten und im Bogen nach hinten geführt und im Austrittsbereich 7 oberhalb des Verdrängers 10 bzw. des einzuziehenden Rohres 20 ausgetragen. Je nach Beschaffenheit und Verwendungszweck des einzuziehenden Rohres kann auf diese Zusatzeinrichtungen 8 und entsprechend auf das Vorsehen einer Rohrzuführung 4 verzichtet werden. Beispielsweise sind für Metallrohre, wie Stahl- oder Gußeisenrohre, keine Trassenbänder oder Steuerkabel erforderlich. In diesem Fall kann der Verdränger 10 direkt mit dem Schwert 1 über die Verstelleinrichtung 5 und die Schwingen 3 verbunden sein.

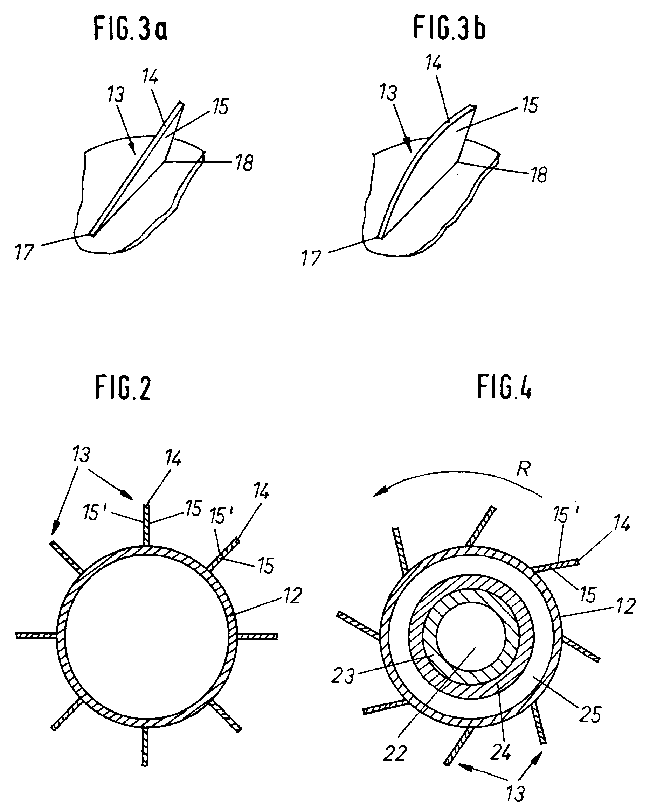

Der Verdränger 10 weist an einem in Fahrtrichtung F betrachtet hinteren Bereich 12 an seiner Umfangsfläche Vorsprünge 13 auf. Die Vorsprünge 13 sind unter Ausbildung eines Zwischenraums 16 voneinander beabstandet und erstrecken sich in Fahrtrichtung F betrachtet von einem vorderen Ende 17 zu einem hinteren Ende 18. Die Vorsprünge 13 weisen, wie in Figur 3a und 3b dargestellt, eine oberseitige Kontaktfläche 14 und eine erste und zweite Seitenfläche 15 und 15' auf, die etwa parallel zueinander angeordnet sind und an die oberseitige Kontaktfläche 14 angrenzen. Die oberseitige Kontaktfläche 14 erstreckt sich von dem vorderen Ende 17 zu dem hinteren Ende 18 der Vorsprünge und gleichzeitig ausgehend vom vorderen Ende 17 quer zur Fahrtrichtung. Die Höhe der oberseitigen Kontaktfläche 14 ist am hinteren Ende 18 maximal, wohingegen die Höhe der oberseitigen Kontaktfläche am vorderen Ende 17 der Höhe der Umfangsfläche des Verdrängers entspricht. Die Seitenflächen 15 und 15' sind in entsprechender Weise ausgebildet. Die Vorsprünge 13 sind auf der Umfangsfläche des hinteren Bereichs 12 des Verdrängers 10 gleichmäßig beabstandet angeordnet und erstrecken sich radial nach außen, so daß auf die oberseitige Kontaktfläche 14 auftreffende Steine oder sonstige härtere Gegenstände kontinuierlich in den Erdboden geschoben werden. Um den Widerstand des Verdrängers 10 beim Durchziehen durch das Erdreich gering zu halten, sind die oberseitigen Kontaktflächen als schmale ebene Flächen ausgebildet. Der hintere Bereich 12 des Verdrängers 10 ist etwa kegelstumpfartig ausgebildet, wobei sich der Durchmesser des hinteren Bereichs 12 entgegengesetzt zur Fahrtrichtung F vergrößert. Durch diese konstruktive Maßnahme sind die auf der Umfangsfläche des hinteren Bereichs 12 angeordneten Vorsprünge 13 strahlenförmig angeordnet, d.h. die Breite der Zwischenräume 16 ist am vorderen Ende 17 geringer als am hinteren Ende 18 der Vorsprünge 13. Durch den kegelstumpfartig aufgeweiteten hinteren Bereich 12 des Verdrängers 10 wird eine gleichmäßige strahlenförmige Anordnung der Vorsprünge 13 auf der Umfangsfläche des hinteren Bereichs 12 gewährleistet. Durch die strahlenförmige Anordnung der Vorsprünge 13 wird zusätzlich die Filterwirkung erhöht, so daß auch kleine Steine zumindest über eine gewisse Distanz radial nach außen in den Erdboden geschoben werden.

Alternativ kann der hintere Bereich 12 des Verdrängers 10 zylindrisch ausgebildet sein, wobei die Vorsprünge 13 sich im wesentlichen parallel zur Fahrtrichtung F erstrecken.

Zusätzlich oder alternativ kann das Schwert 1 mit Vorsprüngen 13 versehen sein. In dem konkreten Ausführungsbeispiel gemäß Figur 1 sind die Vorsprünge 13 auf einer Umfangsfläche eines Aufsatzes 19 angeordnet, wobei der Aufsatz 19 lösbar an den Schwingen 3 des Schwertes 1 befestigbar ist. Die Vorsprünge 13 sind auf der Umfangsfläche strahlenförmig angeordnet, so daß die Breite der Zwischenräume 16 an dem vorderen Ende 17 der Vorsprünge 13 geringer ist als am hinteren Ende 18 der Vorsprünge 13. Alternativ oder zusätzlich können die Vorsprünge 13 an einem in den Erdboden eindringenden Bereich der Umfangsfläche des Schwertes 1 vorgesehen sein.

Figur 2 zeigt eine Schnittansicht des hinteren Bereichs 12 des Verdrängers 10 entlang der Linie II-II von Figur 1. Deutlich zu erkennen sind hier die auf der Umfangsfläche des hinteren Bereichs 12 befindlichen Vorsprünge 13. Die Vorsprünge 13 sind im wesentlichen gleichmäßig um die Umfangsfläche des hinteren Bereichs 12 verteilt und erstrecken sich in radialer Richtung nach außen, d.h. quer zur Fahrtrichtung F. Die oberseitige Kontaktfläche 14 der Vorsprünge 13 ist im wesentlichen eben ausgebildet und durch eine erste Seitenfläche 15 und eine zweite Seitenfläche 15' begrenzt, die etwa parallel zueinander angeordnet sind und sich radial nach außen erstrecken, so daß der Querschnitt der Vorsprünge 13 im wesentlichen rechteckförmig ausgebildet ist.

In den Figuren 3a und 3b sind zwei verschiedene Ausgestaltungen der Vorsprünge 13 in perspektivischer Ansicht dargestellt. In der Ausgestaltung gemäß Figur 3a erstreckt sich die oberseitige Kontaktfläche 14 des Vorsprungs 13 geradlinig vom vorderen Ende 17 zum hinteren Ende 18 des Vorsprungs 13. Alternativ kann die oberseitige Kontaktfläche 14 bogenförmig vom vorderen Ende 17 zum hinteren Ende 18 des Vorsprungs verlaufen, wie in Figur 3b gezeigt ist.

In Figur 4 ist eine weitere Ausgestaltung des hinteren Bereichs 12 des Verdrängers 10 in Schnittansicht dargestellt. In dieser Ausgestaltung sind die Vorsprünge 13 schräg zur Umfangsfläche des hinteren Bereichs 12 des Verdrängers 10 angeordnet, derart, daß die Vorsprünge 13 mit der ersten Seitenfläche 15 zur Umfangsfläche des hinteren Bereichs 12 hingeneigt sind. In entsprechender Weise sind die den ersten Seitenflächen 15 gegenüberliegenden zweiten Seitenflächen 15' von der Umfangsfläche des hinteren Bereichs 12 weggeneigt. Der hintere Bereich 12 ist gemäß der Ausgestaltung nach Figur 4 rotierbar ausgestaltet. Zu diesem Zweck umfaßt der hintere Bereich 12 des Verdrängers 10 einen inneren, drehfesten Bereich 23 und einen radial äußeren drehbaren Bereich 25, wobei zwischen dem drehfesten Bereich 23 und dem drehbaren Bereich 25 ein Lager 24 angeordnet ist. Die Rotation des drehbaren Bereichs 25 erfolgt in Drehrichtung R (Pfeilrichtung), so daß die zweiten Seitenflächen 15', welche von der Umfangsfläche des hinteren Bereichs 12 des Verdrängers 10 weggeneigt sind, den Erdboden radial nach außen schieben. Im radial innen gelegenen, drehfesten Bereich 23 ist eine Öffnung 22 vorgesehen, die zur Aufnahme bzw. zur Befestigung des einzuziehenden Rohres 20 dient, so daß das Rohr 20 drehfest am hinteren Bereich 12 des Verdrängers 10 angeordnet ist. Auf der gegenüberliegenden Seite dient die Öffnung 22 zur Aufnahme eines korrespondierenden Befestigungsmittels, beispielsweise eines Zapfens, so daß der hintere Bereich 12 lösbar am Verdränger 10 befestigbar ist.

In entsprechender Weise kann auch die Ausgestaltung nach Figur 2 rotierbar ausgebildet sein, wobei die Rotation auch entgegengesetzt zur Drehrichtung R erfolgen kann.

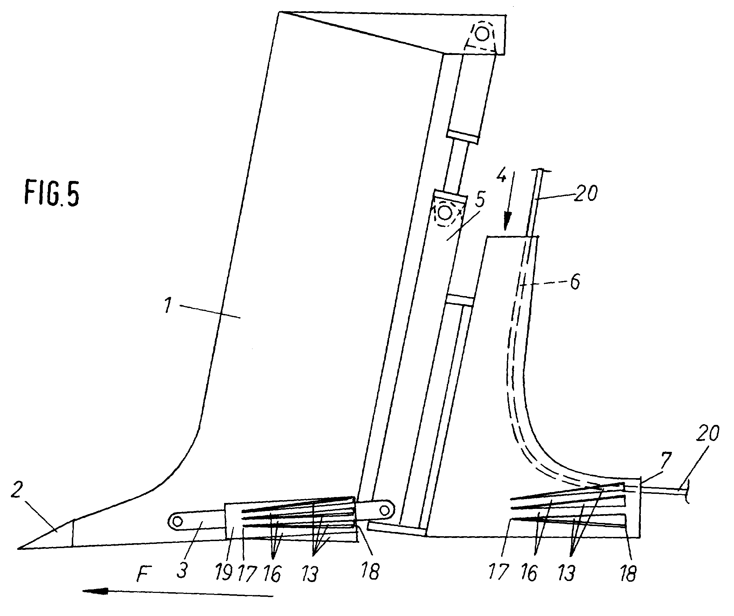

In Figur 5 ist eine zweite Ausführungsform der Anordnung in Seitenansicht dargestellt. Das Schwert 1 ist über die Verstelleinrichtung 5 und über Schwingen 3 mit einer Rohrzuführung 4 verbunden. Die Rohrzuführung 4 dient zum Einlegen von Rohren 20 oder Kabeln in die vom Schwert gebildete Erdrinne. Diese Ausführungsform ist insbesondere dann zweckmäßig, wenn die einzulegenden Rohre oder Kabel einen Durchmesser von 180 mm oder weniger aufweisen. Das einzulegende Rohr 20 wird von oben in eine Rinne 6 der Rohrzuführung 4 eingebracht und im hinten gelegenen Austrittsbereich 7 in die Erdrinne ausgetragen. Die Rohrzuführung 4 weist an ihrer Umfangsfläche Vorsprünge 13 auf, wobei die Vorsprünge 13 zweckmäßigerweise an einem in Fahrtrichtung F betrachtet hinteren Bereich der Rohrzuführung 4 angeordnet sind. Die Vorsprünge 13 sind in Bezug auf die Fahrtrichtung F strahlenförmig angeordnet, so daß sich die Breite der Zwischenräume 16 entgegengesetzt zur Fahrtrichtung F vergrößert. Alternativ können sich die Vorsprünge 13 im wesentlichen parallel zur Fahrtrichtung F erstrecken. Die Vorsprünge 13 weisen eine oberseitige Kontaktfläche 14 und zwei etwa parallel zueinander angeordnete Seitenflächen 15 und 15', wie oben beschrieben, auf.

Zusätzlich können am Schwert 1 Vorsprünge 13 vorgesehen sein, wobei die Vorsprünge 13 entsprechend dem Ausführungsbeispiel nach Figur 1 auf einer Umfangsfläche eines Aufsatzes 19 angeordnet sind, wobei der Aufsatz 19 lösbar an den Schwingen 3 des Schwertes 1 befestigbar ist.

Zusätzlich oder alternativ können die Vorsprünge 13 an einem in den Boden eindringenden Bereich der Umfangsfläche des Schwertes 1 angeordnet sein.

Die obigen Ausführungsbeispiele beschreiben eine effektive und einfach zu handhabende Anordnung zum Einführen eines Rohres in den Erdboden. Durch das Vorsehen von Vorsprüngen 13 am Schwert und/oder am Verdränger bzw. an der Rohrzuführung wird eine optimale Filterwirkung erzielt, so daß Steine oder sonstige härtere Gegenstände in den Erdboden zurückgeschoben werden und nicht in Kontakt mit dem einzuführenden Rohr kommen. Eine Beschädigung des Rohrs wird somit weitgehend vermieden.

### Bezugszeichenliste

- 1:: Schwert
- 2:: Spitze
- 3:: Schwingen
- 4:: Führung
- 5:: Verstelleinrichtung
- 6:: Rinne (Führung)
- 7:: Austrittsbereich (Führung)
- 8:: Zusatzeinrichtungen
- 9:: unterer Bereich (Führung)
- 10:: Verdränger
- 11:: vorderer Bereich (Verdränger)
- 12:: hinterer Bereich (Verdränger)
- 13:: Vorsprünge
- 14:: oberseitige Kontaktfläche (Vorsprung)
- 15:: erste Seitenfläche (Vorsprung)
- 15':: zweite Seitenfläche (Vorsprung)
- 16:: Zwischenraum
- 17:: vorderes Ende (Vorsprung)
- 18:: hinteres Ende (Vorsprung)
- 19:: Aufsatz
- 20:: Rohr
- 22:: Öffnung
- 23:: drehfester Bereich (Verdränger)
- 24:: Lager
- 25:: drehbarer Bereich (Verdränger)
- F:: Fahrtrichtung
- R:: Drehrichtung

## Patentansprüche

1. Anordnung zum Einführen eines Rohres (20) oder Kabels in den Erdboden mittels eines pflugartigen Geräts, das mit einem Schwert (1) in den Erdboden eindringt und eine Erdrinne bildet, wobei das Schwert (1) einen Verdränger (10), der einen Erdkanal bildet und mit dem einzuführenden Rohr (20) oder Kabel verbunden ist, und/oder eine Rohrzuführung (4) zieht, die zum Einlegen von Rohren (20) oder Kabeln in die vom Schwert (1) gebildete Erdrinne dient,
**dadurch gekennzeichnet,**
daß das Schwert (1) und/oder der Verdränger (10) einerseits oder das Schwert (1) und/oder die Rohrzuführung (4) andererseits an mindestens einem in den Erdboden eindringenden Bereich Vorsprünge (13) aufweisen, die unter Ausbildung eines Zwischenraums (16) voneinander beabstandet sind, und daß die Vorsprünge (13) wenigstens eine Räumfläche (14, 15, 15') aufweisen, die derart ausgebildet ist, daß Steine oder dergleichen härtere Gegenstände quer zur Fahrtrichtung (F) in den Erdboden geschoben werden.

2. Anordnung nach Anspruch 1,
**dadurch gekennzeichnet,**
daß sich die Räumflächen (14, 15, 15') der Vorsprünge (13) im wesentlichen von einem in Fahrtrichtung (F) betrachtet vorderen Ende (17) zu einem hinteren Ende (18) der Vorsprünge (13) und gleichzeitig ausgehend vom vorderen Ende (17) quer zur Fahrtrichtung (F) erstrecken, derart, daß sich die Höhe der Räumflächen (14, 15, 15') kontinuierlich zum hinteren Ende (18) hin vergrößert.

3. Anordnung nach Anspruch 1 oder 2,
**dadurch gekennzeichnet,**
daß die Räumflächen (14, 15, 15') eine oberseitige Kontaktfläche (14) und zwei quer zur Fahrtrichtung erstreckende und im wesentlichen parallel zueinander angeordnete Seitenflächen (15, 15') umfassen, wobei die Seitenflächen (15, 15') an die oberseitige Kontaktfläche (14) angrenzen.

4. Anordnung nach einem der Ansprüche 1 bis 3,
**dadurch gekennzeichnet,**
daß die oberseitige Kontaktfläche (14) hinsichtlich ihrer Breite und Länge so dimensioniert ist, daß sie eine im Vergleich zur Breite der Zwischenräume (16) geringere Breite und größere Länge aufweist.

5. Anordnung nach einem der Ansprüche 1 bis 4,
**dadurch gekennzeichnet,**
daß sich die Vorsprünge (13) im wesentlichen parallel zur Fahrtrichtung (F) erstrecken.

6. Anordnung nach einem der Ansprüche 1 bis 4,
**dadurch gekennzeichnet,**
daß die Vorsprünge (13) in Bezug auf die Fahrtrichtung (F) strahlenförmig angeordnet sind, derart, daß die Breite der Zwischenräume (16) am vorderen Ende (17) der Vorsprünge (13) geringer ist als am hinteren Ende (18) der Vorsprünge (13).

7. Anordnung nach einem der Ansprüche 1 bis 6,
**dadurch gekennzeichnet,**
daß der Verdränger (10) im wesentlichen zylindrisch ausgebildet ist, wobei die Vorsprünge (13) an einem definierten, vorzugsweise in Fahrtrichtung (F) betrachtet hinteren Bereich (12) des Verdrängers (10) angeordnet sind, und daß sich die Vorsprünge (13) radial von der Umfangsfläche des hinteren Bereichs (12) nach außen erstrecken.

8. Anordnung nach einem der Ansprüche 1 bis 6,
**dadurch gekennzeichnet,**
daß der Verdränger (10) im wesentlichen zylindrisch ausgebildet ist, wobei die Vorsprünge (13) an einem definierten, vorzugsweise in Fahrtrichtung (F) betrachtet hinteren Bereich (12) des Verdrängers (10) angeordnet sind, und daß sich die Vorsprünge (13) schräg zur Umfangsfläche des hinteren Bereichs (12) des Verdrängers (10) erstrecken, derart, daß die Vorsprünge (13) mit einer Seitenfläche (15) zur Umfangsfläche des hinteren Bereichs (12) hingeneigt sind.

9. Anordnung nach Anspruch 7 oder 8,
**dadurch gekennzeichnet,**
daß der hintere Bereich (12) des Verdrängers (10) im wesentlichen kegelstumpfartig ausgebildet ist, derart, daß sich der Durchmesser des hinteren Bereichs (12) entgegengesetzt zur Fahrtrichtung (F) hin vergrößert, und daß die Vorsprünge (13) in Bezug auf die Fahrtrichtung (F) strahlenförmig an der Umfangsfläche des hinteren Bereichs (12) angeordnet sind, derart, daß die Breite der Zwischenräume (16) am vorderen Ende (17) der Vorsprünge (13) geringer ist als am hinteren Ende (18) der Vorsprünge (13).

10. Anordnung nach einem der Ansprüche 7 bis 9,
**dadurch gekennzeichnet,**
daß der hintere Bereich (12) des Verdrängers (10) in Umfangsrichtung (R) rotierbar ausgebildet ist.

11. Anordnung nach einem der Ansprüche 1 bis 10,
**dadurch gekennzeichnet,**
daß das Schwert (1) über Zugmittel (3), insbesondere über Schwingen (3), mit dem Verdränger (10) oder der Rohrzuführung (4) verbunden ist, und daß ein Aufsatz (19) mit einer Umfangsfläche und darauf angeordneten Vorsprüngen (13) vorgesehen ist, wobei der Aufsatz (19) lösbar an den Zugmitteln (3) befestigbar ist.
